# EUROPEAN PATENT APPLICATION

(11) **EP 4 579 295 A1**
(43) Date of publication of application: **02.07.2025**
(21) Application number: 24222825.2
(22) Date of filing: 23.12.2024
(51) Int. Cl.: G02B 6/12, G02B 6/125, G02B 6/132

(54) **OPTICAL CIRCUIT AND METHOD OF MANUFACTURING OPTICAL CIRCUIT**

(30) Priority: 26.12.2023 JP 2023220023
(71) Applicant: Nichia Corporation, Anan-shi, Tokushima 774-8601 (JP)
(72) Inventor: HATAKEYAMA, Koichiro, 774-8601 (JP); SANO, Masahiko, 774-8601 (JP); OKADA, Masanori, 774-8601 (JP)
(74) Representative: Betten & Resch

(57) **Abstract**

An optical circuit includes a substrate; a first optical waveguide disposed on the substrate; and a second optical waveguide disposed on the substrate and configured to be optically coupled to the first optical waveguide. The first optical waveguide includes a first cladding, a second cladding, and a first core disposed between the first cladding and the second cladding. The second optical waveguide includes a third cladding, a fourth cladding, and a second core disposed between the third cladding and the fourth cladding. The first cladding is disposed closer to the substrate than the second cladding is. The third cladding is disposed closer to the substrate than the fourth cladding is. A material of the first cladding differs from a material of the third cladding.

## Description

### TECHNICAL FIELD

The present disclosure relates to an optical circuit and a method of manufacturing an optical circuit.

Optical circuits in which a semiconductor optical element and an optical waveguide are integrated on a substrate are in high demand in the fields of optical communication and optical sensors. While semiconductor optical elements such as laser light sources and light receiving elements are formed of compound semiconductors in many cases, optical waveguides are formed by using a silicon photonics technology. It is necessary to highly efficiently couple materials that are respectively suitable for a semiconductor optical element and an optical waveguide.

For example, Japanese Patent Publication No. 2016-164945 proposes a configuration in which a layered structure including an active optical waveguide and a layered structure including passive optical waveguide are bonded on a common cladding. When optical waveguide regions formed of different materials are coupled on a common cladding, it is necessary to select a low refractive index material for the common cladding such that the common cladding can function as a cladding for both cores formed of different materials.

Currently, it is difficult to optically couple optical waveguides formed of different materials with high efficiency by using different low-refractive index materials.

### SUMMARY

One aspect of the present disclosure provides an optical circuit and a method of manufacturing the same, in which optical waveguides formed of different materials are coupled with high efficiency.

In one embodiment, an optical circuit includes: a substrate; a first optical waveguide disposed on the substrate; and a second optical waveguide disposed on the substrate and configured to be optically coupled to the first optical waveguide. The first optical waveguide includes a first cladding, a second cladding, and a first core disposed between the first cladding and the second cladding. The second optical waveguide includes a third cladding, a fourth cladding, and a second core disposed between the third cladding and the fourth cladding. The first cladding is disposed closer to the substrate than the second cladding is. The third cladding is disposed closer to the substrate than the fourth cladding is. A material of the first cladding differs from a material of the third cladding.

In another embodiment, a method of manufacturing an optical circuit includes: providing a first layered body including a first substrate, a first cladding, a first core, a second cladding, and a first protective layer that are arranged in this order; providing a second layered body including a second substrate, a third cladding, a second core, and a second protective layer that are arranged in this order, the third cladding including a material different from a material of the first cladding; arranging the first layered body and the second layered body side by side such that the first core and the second core face each other, and fixing the first protective layer and the second protective layer to a temporary substrate; bonding the first substrate and the second substrate to a third substrate; after the bonding of the first substrate and the second substrate to the third substrate, removing the temporary substrate; processing the first layered body to obtain a first optical waveguide including the first cladding, the first core, and the second cladding; and processing the second layered body to obtain a second optical waveguide including at least the third cladding and the second core and optically coupled to the first optical waveguide.

### BRIEF DESCRIPTION OF THE DRAWINGS

FIG. 1A and FIG. 1B are diagrams illustrating disadvantages that occur when a common cladding is used;
FIG. 2A is a schematic top view of an optical circuit according to a first embodiment;
FIG. 2B is a cross-sectional view taken through line IIB-IIB of FIG. 2A;
FIG. 3 is a top view illustrating an application example of the optical circuit of FIG. 2A and FIG. 2B;
FIG. 4A is a perspective view of a first layered body;
FIG. 4B is a lateral side view of the first layered body;
FIG. 5A is a perspective view of a second layered body;
FIG. 5B is a lateral side view of the second layered body;
FIG. 6A is a manufacturing process diagram of an optical circuit using a first layered body and a second layered body;
FIG. 6B is a manufacturing process diagram of the optical circuit using the first layered body and the second layered body;
FIG. 6C is a manufacturing process diagram of the optical circuit using the first layered body and the second layered body;
FIG. 6D is a manufacturing process diagram of the optical circuit using the first layered body and the second layered body;
FIG. 6E is a manufacturing process diagram of the optical circuit using the first layered body and the second layered body;
FIG. 6F is a manufacturing process diagram of the optical circuit using the first layered body and the second layered body;
FIG. 7A is a top view illustrating a bonded state of the first layered body and the second layered body;
FIG. 7B is a VII-VII cross-section of FIG. 7A;
FIG. 8 is a top view illustrating formation of waveguides by processing the layered bodies;
FIG. 9A is a cross section taken through IXA-IXA of FIG. 8;
FIG. 9B is a cross section taken through IXB-IXB of FIG. 8;
FIG. 9C is a cross section taken through IXC-IXC of FIG. 8;
FIG. 9D is a diagram illustrating an example of processing a second optical waveguide;
FIG. 9E is a diagram illustrating the example of processing the second optical waveguide;
FIG. 10 is a schematic diagram illustrating an optical circuit according to a second embodiment;
FIG. 11 is a schematic diagram illustrating a third layered body formed between a first layered body and a second layered body on a temporary substrate;
FIG. 12 is a schematic cross-sectional view of an optical circuit according to a third embodiment;
FIG. 13A is a perspective view of a first layered body including a dielectric multilayer film;
FIG. 13B is a lateral side view in the optical axis direction of the first layered body of FIG. 13A;
FIG. 14 is a cross-sectional view of an optical circuit according to a modification of the third embodiment;
FIG. 15 is a top view of an optical circuit according to a fourth embodiment;
FIG. 16 is a top view of an optical circuit according to a first modification of the fourth embodiment;
FIG. 17A is a top view of an optical circuit according to a second modification of the fourth embodiment;
FIG. 17B is a cross-sectional view taken through XVIIB-XVIIB of FIG. 17A;
FIG. 18 is a top view of an optical circuit according to a third modification of the fourth embodiment; and
FIG. 19 is a top view of an optical circuit according to a fourth modification of the fourth embodiment.

### DETAILED DESCRIPTION

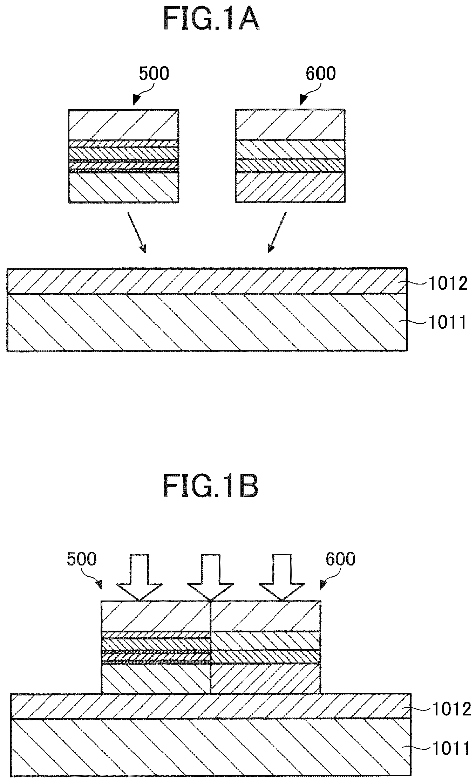

Before describing a configuration and a manufacturing method of an optical circuit according to an embodiment, technical disadvantages of a conventional configuration using a common cladding will be described with reference to FIG. 1A and FIG. 1B. FIG. 1A and FIG. 1B schematically illustrate an example in which layered bodies are bonded by using a common cladding. Layered bodies 500 and 600 are arranged on a substrate 1011 having a SiO₂ layer 1012 disposed on the substrate 1011, such that the cleaved surfaces of the layered bodies 500 and 600 face each other. Then, the layered bodies 500 and 600 are bonded to each other by being pressurized in the layered direction thereof at 1 MPa and heated at 300°C in a predetermined gas atmosphere. The layered body 500 is processed in a subsequent step so as to have a waveguide structure of a laser chip. The layered body 600 is processed in a subsequent step so as to have a waveguide structure of a passive chip. In this structure, the SiO₂ layer 1012 functions as a common cladding for two waveguide cores and is also needed to be formed of a material that enables bonding. Thus, a degree of freedom in material selection is low.

According to an embodiment, a first optical waveguide and a second optical waveguide formed of different materials are coupled with high efficiency by transferring a first layered body and a second layered body formed of different materials from a temporary substrate to a common substrate, and processing the first layered body and the second layered body into optical waveguides through a collectively-formed mask.

Embodiments of the present disclosure will be described below with reference to the accompanying drawings. The following description is provided for the purpose of embodying the technical ideas of the present disclosure; however, the present disclosure is not limited to the embodiments in the following description unless specifically stated. In the drawings, members having the same functions may be denoted by the same reference numerals. In consideration of ease of explanation or ease of understanding of key points, configurations may be illustrated in separate embodiments for the sake of convenience; however, such configurations illustrated in different embodiments or examples can be partially substituted or combined with one another. A description of an embodiment given after a description of another embodiment will be focused mainly on matters different from those of the previously described embodiment, and a duplicate description of matters common to the previously described embodiment may be omitted. The sizes, positional relationships, and the like of members illustrated in the drawings may be exaggerated for clearer illustration.

### <First Embodiment>

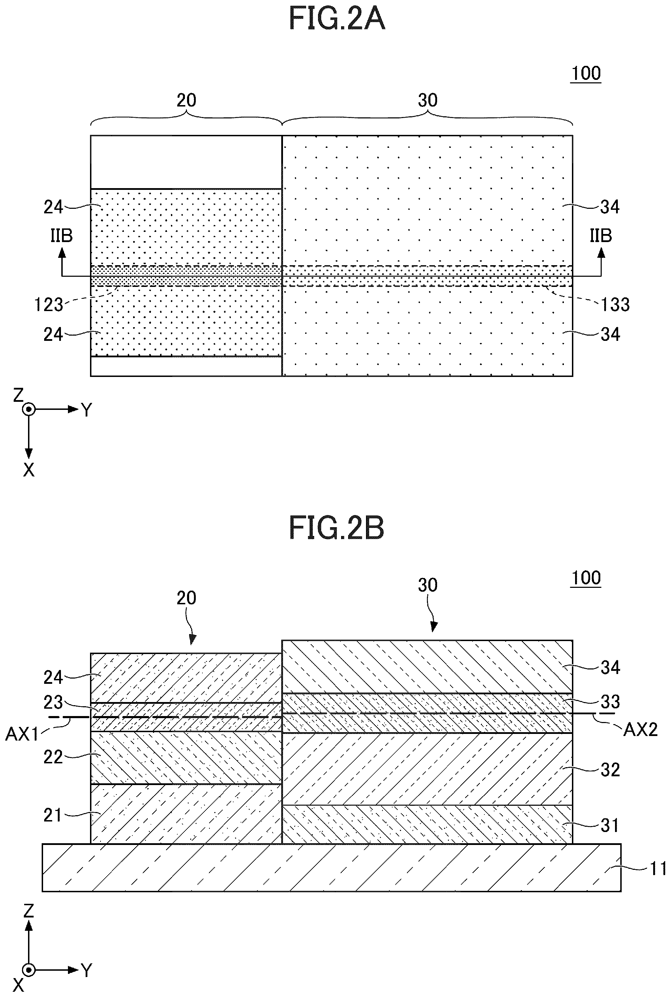

FIG. 2A is a schematic top view of an optical circuit 100 according to a first embodiment. FIG. 2B is a cross-sectional view taken through line IIB-IIB of FIG. 2A. In a coordinate system of FIG. 2A and FIG. 2B, a layered direction perpendicular to a substrate 11 is a Z direction, a direction in which light is guided is a Y direction, and a direction orthogonal to the Y direction and the Z direction is an X direction. The optical circuit 100 includes the substrate 11, a first optical waveguide 20 disposed on the substrate 11, and a second optical waveguide 30 disposed on the substrate 11 and configured to be optically coupled to the first optical waveguide 20. The first optical waveguide 20 includes a first cladding 22, a second cladding 24, and a first core 23 disposed between the first cladding 22 and the second cladding 24. The second optical waveguide 30 includes a third cladding 32, a fourth cladding 34, and a second core 33 disposed between the third cladding 32 and the fourth cladding 34. The first cladding 22 is disposed closer to the substrate 11 than the second cladding 24 is, and the third cladding 32 is disposed closer to the substrate 11 than the fourth cladding 34 is. The material of the first cladding 22 is different from the material of the third cladding 32. In the optical circuit according to the first embodiment, because the material of the first cladding 22 is different from the material of the third cladding 32, an appropriate material can be selected for the second core 33 of the second optical waveguide 30. As used herein, "different materials" means, for example, two different materials, one of which is a nitride semiconductor such as AlₓGa₁₋ₓN (0 ≤ x ≤ 1) and the other is an oxide or a fluoride such as SiO₂, Al₂O₃, or MgF₂. If only the mixed crystal ratios x of materials are different, as in the case of AlₓGa₁₋ₓN (0 < x < 1), it is considered that the "materials are the same". However, if the mixed crystal ratio x of one material is 0 and the mixed crystal ratio x of another material is 1, the materials, that is, GaN and AlN are considered different. The same applies to other materials.

The first optical waveguide 20 includes a linear waveguide 123 at an end portion of the first optical waveguide 20 closer to the second optical waveguide 30, and the second optical waveguide 30 includes a linear waveguide 133 at an end portion of the second optical waveguide 30 closer to the first optical waveguide 20. The first optical waveguide 20 and the second optical waveguide 30 face each other in an optical axis direction along the line IIB-IIB. The second core 33 is located on an extension line of a first optical axis AX1 of the first optical waveguide 20 or the first core 23 is located on an extension line of a second optical axis AX2 of the second optical waveguide 30, as illustrated in FIG. 2A and FIG. 2B. The first optical axis AX1 and the second optical axis AX2 are preferably coaxial from the viewpoint of coupling efficiency; however, the present disclosure is not limited thereto. Angular deviation or axial deviation in the X direction, the Y direction, or the Z direction between the first optical axis AX1 and the second optical axis AX2 can be tolerated within a range in which optical coupling is possible. Further, as will be described later, the first optical waveguide 20 and the second optical waveguide 30 may be optically coupled to each other via a third waveguide that is oblique or curved in the XY plane.

The first core 23 of the first optical waveguide 20 includes an active layer, the first cladding 22 includes, for example, an n-side nitride semiconductor, and the second cladding 24 includes a p-side nitride semiconductor. The second cladding 24 may include a light-transmissive electrically conductive film. The light-transmissive electrically conductive film may be formed of indium tin oxide (ITO), indium zinc oxide (IZO), or the like. The second core 33 of the second optical waveguide 30 includes an oxide or a nitride. Each of the third cladding 32 and the fourth cladding 34 is an oxide, a nitride, or a fluoride. The third cladding 32 and the fourth cladding 34 may include an amorphous material. At least a portion of the second core 33 of the second optical waveguide 30 may include an amorphous material. When at least a portion of the second core 33 includes an amorphous material, a difference in refractive index between the second core 33 and the third cladding 32 and the fourth cladding 34 can be increased, and thus light confinement in the second optical waveguide 30 can be enhanced. The fourth cladding 34 may be an air layer instead of an oxide, a nitride, or a fluoride.

The active layer of the first core 23 is formed of, for example, a quantum well. Light generated in the active layer by injection of carriers is amplified while reciprocating in the linear waveguide 123 in the Y direction. The refractive index of the first core 23 is higher than the refractive index of the first cladding 22 and the refractive index of the second cladding 24, and light is confined between the first cladding 22 and the second cladding 24 in the layered direction (Z direction) perpendicular to the substrate 11. The first core 23 may include a first optical guide layer between the quantum well and the first cladding 22. The first core 23 may include a second optical guide layer between the quantum well and the second cladding 24. The linear waveguide 123 is formed as, for example, a ridge waveguide, and light confinement in the X direction is achieved.

In the linear waveguide 133 of the second optical waveguide 30, light is confined in the second core 33 by the third cladding 32 and the fourth cladding 34. In the X direction parallel to the substrate 11, light is confined by mediums on both sides of the linear waveguide 133 in the width direction. Light confinement in the width direction of the linear waveguide 133 may be defined by the processed shape of the second optical waveguide 30. The second core 33 may be etched into a thin line shape and may be surrounded by a medium having a low refractive index. A first substrate 21 may be disposed between the first cladding 22 and the substrate 11. A second substrate 31 may be disposed between the third cladding 32 and the substrate 11. Depending on the material of the first substrate 21, the first substrate 21 may function as a cladding for the first core 23, together with the first cladding 22. Depending on the material of the second substrate 31, the second substrate 31 may function as a cladding for the second core 33, together with the third cladding 32.

A width of the first core 23 is measured in a direction perpendicular to the layered direction of the first optical waveguide 20 in a cross section perpendicular to the first optical axis AX1. A width of the second core 33 is measured in a direction perpendicular to the layered direction of the second optical waveguide 30 in a cross section perpendicular to the second optical axis AX2. From the viewpoint of achieving highly efficient optical coupling, it is desirable that a difference between the width of the first core 23 and the width of the second core 33 is 3 um or less. The difference between the width of the first core 23 and the width of the second core 33 may be 2 um or less, 1 um or less, 0.5 um or less, or 0.1 um or less. Alternatively, the difference between the width of the first core 23 and the width of the second core 33 may be substantially zero. This is achieved by performing dry etching using a mask having a constant ridge width in a manufacturing method, which will be described later. As used herein, the "width of a core" refers to the width of a core up to a position approximately 10 um away from a corresponding one of two facing end surfaces of the first optical waveguide 20 and the second optical waveguide 30. As described above, positional deviation in the X direction, the Y direction, or the Z direction between first optical axis AX1 and second optical axis AX2 is tolerated within a range in which optical coupling is obtained. The end surfaces of the first optical waveguide 20 and the second optical waveguide 30 facing each other may be cleaved surfaces or etched surfaces. For example, surfaces formed by reactive ion etching may serve as the facing end surfaces. In FIG. 2A, the first optical waveguide 20 includes the linear waveguide 123, and the second optical waveguide 30 includes the linear waveguide 133; however, the first optical waveguide 20 and the second optical waveguide 30 may include not only linear waveguides, but also inclined or curved optical waveguides.

The optical circuit 100 can be manufactured at a low cost as will be described later. By using core materials and cladding materials suitable for the first optical waveguide 20 and the second optical waveguide 30, the first optical waveguide 20 and the second optical waveguide 30 can be optically coupled to each other with high efficiency and at a low cost and can be integrated on the substrate 11. The coupling efficiency can be, for example, 50% or more and 99% or less, 750 or more and 99% or less, or 90% or more and 99% or less. This is because the heights and the widths of the first core 23 and the second core 33 can be adjusted so as to allow the first optical waveguide 20 and the second optical waveguide 30 to be optically coupled. The first optical waveguide 20 can be applied to a laser light source, a light receiving element, a modulation element, or the like as an active waveguide. The second optical waveguide 30 may be used as a passive waveguide. The optical circuit 100 can be applied to various combinations of semiconductor optical elements and optical waveguides.

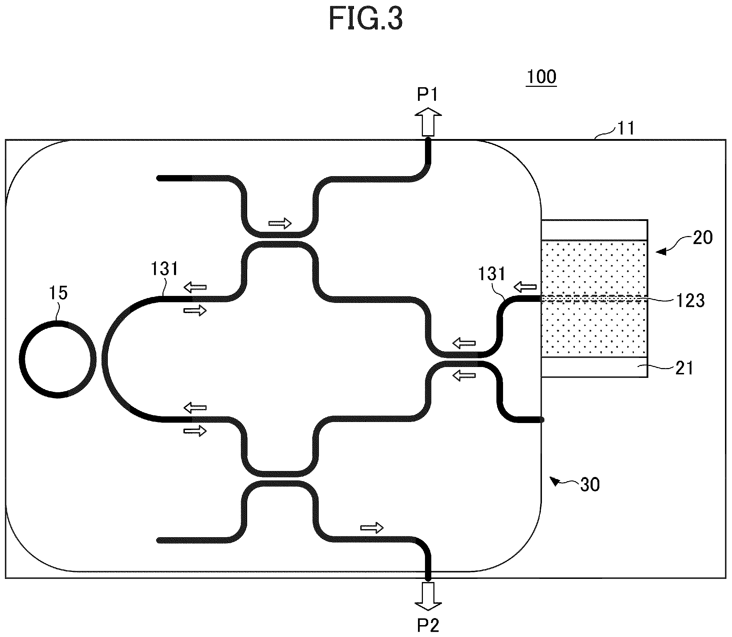

FIG. 3 is a top view illustrating an application example of the optical circuit 100. The optical circuit 100 can be applied to an optical gyro sensor. The first optical waveguide 20 is used as a laser light source of the optical gyro sensor. In a case where the first optical waveguide 20 is used as a laser light source, a group III-V compound semiconductor such as GaN, GaAs, or InP can be used. These compound semiconductor materials may be two-element based, three-element based, or four-element based materials. Among them, GaN having a refractive index of approximately 2.4 is suitable because of a small difference in refractive index from the second optical waveguide 30. In a case where a GaN-based compound semiconductor is used, a nitride semiconductor such as AlGaN, AlInN, or AlGaInN is used as the first cladding 22 and the second cladding 24. The first cladding 22 may be doped with an n-type impurity such as Si or Ge to form an n-type nitride semiconductor, and the second cladding 24 may be doped with a p-type impurity such as Be or Mg to form a p-type nitride semiconductor. The second cladding 24 may include a light-transmissive electrically conductive film in addition to the p-type nitride semiconductor. The first optical waveguide 20 may be provided at each of output ports P1 and P2 of the optical circuit 100 and may function as a light receiving element.

The second optical waveguide 30 includes a waveguide 131 including straight lines and curved lines, and a resonator 15 optically coupled to the waveguide 131. The second core 33 forming the waveguide 131 of the second optical waveguide 30 may include an oxide or a nitride. As an oxide or a nitride, for example, SiN, SiON, Ta₂O₅, Nb₂O₅, TiO₂, HfO₂, AlN, LiNbO₃, a mixed material thereof, or the like can be used. The third cladding 32 and the fourth cladding 34 may include an oxide or a fluoride. As an oxide or a fluoride, for example, SiO₂, MgF₂, CaF₂, Al₂O₃, a mixed material thereof, or the like can be used. The materials of the second core 33, the third cladding 32, and the fourth cladding 34 may include impurities in order to adjust the refractive indices. The resonator 15 may be formed by using the same process and the same material as the waveguide 131, or may be formed by using a material different from the waveguide 131.

The waveguide 131 of the second optical waveguide 30 is optically coupled to the linear waveguide 123 of the first optical waveguide 20 used as the laser light source. Light emitted from the first optical waveguide 20, which is used as the laser light source, is coupled to the second optical waveguide 30 and is branched by a directional coupler. As indicated by white arrows in FIG. 3, lights circulate in the waveguide 131 in opposite directions. In the process of circulating in the waveguide 131 in opposite directions, the lights are coupled to the resonator 15 and circulate in the resonator 15 in opposite directions. The light that has circulated clockwise in the waveguide 131 circulates counterclockwise in the resonator 15, is coupled to the waveguide 131, and is output from the output port P1. The light that has circulated counterclockwise in the waveguide 131 circulates clockwise in the resonator 15, is coupled to the waveguide 131, and is extracted from the output port P2.

When the optical circuit 100 is subject to rotation from the outside, optical path lengths experienced by the lights circulating in the resonator 15 in opposite directions vary according to the rotation angle or the angular velocity, and resonance frequencies of the light circulating clockwise in the resonator 15 and the light circulating counterclockwise in the resonator 15 vary. As a result, resonance frequencies of the resonator 15 output from the output ports P1 and P2 vary. The angular velocity can be calculated from a difference between the resonance frequencies of the two output lights.

### <Method of Manufacturing Optical Circuit>

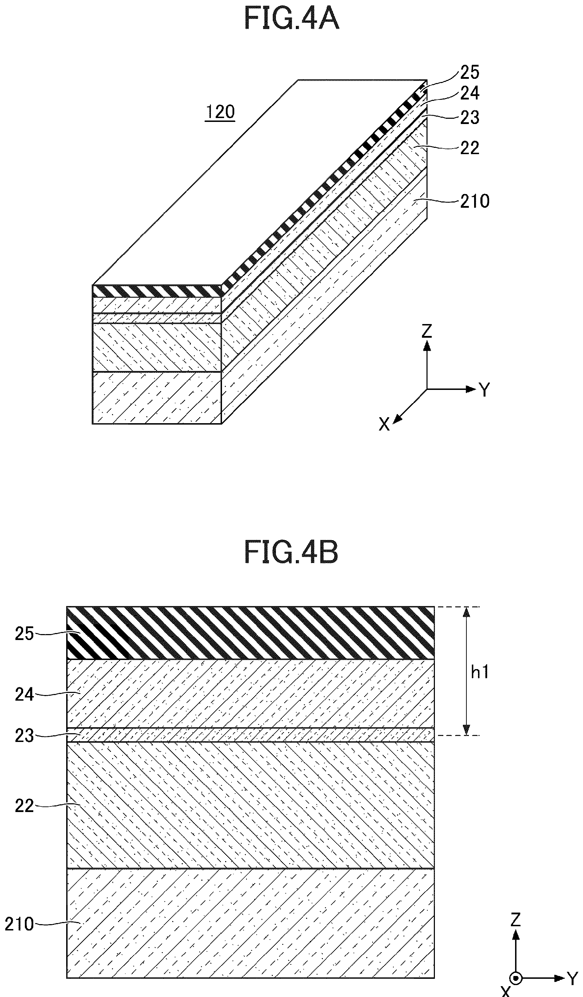

An example of a method of manufacturing an optical circuit 100 will be described with reference to FIG. 4A to FIG. 9C. The method of manufacturing the optical circuit 100 includes: providing a first layered body 120 including a first substrate, a first cladding, a first core, a second cladding, and a first protective layer that are arranged in this order; providing a second layered body 130 including a second substrate, a third cladding, a second core, and a second protective layer that are arranged in this order, the third cladding including a material different from a material of the first cladding; arranging the first layered body and the second layered body side by side such that the first core and the second core face each other, and fixing the first protective layer and the second protective layer to a temporary substrate; bonding the first substrate and the second substrate to a third substrate; after the bonding of the first substrate and the second substrate to the third substrate, removing the temporary substrate; processing the first layered body 120 to obtain a first optical waveguide 20 including the first cladding, the first core, and the second cladding; and processing the second layered body 130 to obtain a second optical waveguide 30 including at least the third cladding and the second core.

### <Providing First Layered Body and Second Layered Body>

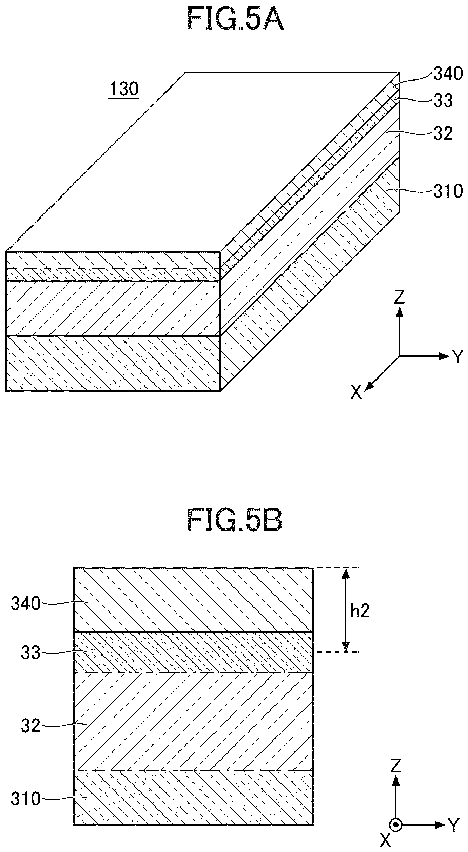

FIG. 4A is a perspective view of the first layered body 120 used to manufacture the first optical waveguide 20 of the optical circuit 100. FIG. 4B is a lateral side view of the first layered body 120. FIG. 5A is a perspective view of the second layered body 130 used to manufacture the second optical waveguide 30. FIG. 5B is a lateral side view of the second layered body 130. The method of manufacturing the optical circuit 100 includes providing the first layered body 120 and providing the second layered body 130. The first layered body 120 includes a substrate 210, a first cladding 22, a first core 23, a second cladding 24, and a first protective layer 25 in this order. The second layered body 130 includes a second substrate 310, a third cladding 32 including a material different from that of the first cladding 22, a second core 33, and a second protective layer 340 in this order.

Referring to FIG. 4A and FIG. 4B, the first layered body 120 is obtained by cutting a structure, in which the first cladding 22, the first core 23, the second cladding 24, and the first protective layer 25 are formed on the substrate 210 in this order, into a predetermined size. As described above, the first layered body 120 includes a compound semiconductor such as a GaN-based compound semiconductor, an InP-based compound semiconductor, or a GaAs-based compound semiconductor. In this example, the first layered body 120 is formed of a GaN-based material. However, the first protective layer 25 may be formed of another material such as SiO₂. The first cladding 22, the first core 23, the second cladding 24, and the first protective layer 25 are sequentially layered on the substrate 210 by a chemical vapor deposition (CVD) method or a physical vapor deposition (PVD) method. As the PVD method, a sputtering method or a molecular beam epitaxy (MBE) method may be used. By performing film deposition by the CVD method or the PVD method, the film thickness can be controlled accurately.

A semiconductor layer including, for example, AlₓGa₁₋ₓN (0 ≤ x ≤ 1) is formed as the first cladding 22, for example, a quantum well including InGaN is formed as the first core 23, and, for example, a semiconductor layer including AlₓGa₁₋ₓN (0 ≤ x ≤ 1) is formed as the second cladding 24. However, the present disclosure is not limited to this example, and materials can be appropriately selected according to the wavelength. The first cladding 22 is doped with Si, serving as an n-type impurity, at a concentration of 1 × 10¹⁸ cm⁻³ or more and 5 × 10¹⁹ cm⁻³ or less. The second cladding 24 is doped with Mg, serving as a p-type impurity, at a concentration of 1 × 10¹⁶ cm⁻³ or more and 1 × 10²² cm⁻³ or less. A region serving as an active layer in the first core 23 may be doped with an impurity.

Referring to FIG. 5A and FIG. 5B, the second layered body 130 is obtained by cutting a structure, in which the third cladding 32, the second core 33, and the second protective layer 340 are formed on a substrate 310 in this order, into a predetermined size. The third cladding 32, the second core 33, and the second protective layer 340 are sequentially layered by the CVD method or the PVD method. The second layered body 130 is formed of, for example, a Si-based material, and SiO₂ is formed as the third cladding 32, undoped Nb₂O₅ is formed as the second core 33, and SiO₂ is formed as the second protective layer 340, on a Si substrate by the sputtering method or the like; however, the present disclosure is not limited to this example. The second core 33 may be formed as an amorphous layer by reactive sputtering or the like. By forming at least the second core 33 of the second layered body 130 as an amorphous layer, the second optical waveguide 30 is formed as an amorphous waveguide in a subsequent step. The third cladding 32 may also be an amorphous layer. By using an amorphous material for the core and the cladding, a difference in refractive index can be easily obtained, and light confinement can be enhanced. Further, by enhancing light confinement, a bending loss of a curved waveguide can be reduced. In addition, in the case of the amorphous waveguide, a low-loss thin-film waveguide can be easily obtained. The material of the second protective layer 340 may be the same as or different from the material of the fourth cladding 34 (see FIG. 2B). The second protective layer 340 can be used as a height adjustment layer for aligning the height of the first core 23 of the first layered body 120 and the height of the second core 33 of the second layered body 130.

As described above, the first layered body 120 is formed such that the first core 23 includes an active layer, the first cladding 22 includes an n-side nitride semiconductor, and the second cladding 24 includes a p-side nitride semiconductor. The second layered body 130 is formed such that the second core 33 includes an oxide or a nitride, the third cladding 32 includes a second oxide or a fluoride, and the second protective layer 340 is provided on the second core 33.

Before being fixed to the temporary substrate, the second layered body 130 may be annealed at a temperature lower than the heating temperature of a growth substrate when the first layered body 120 is provided. As a result, when the second optical waveguide 30 is formed, a transmittance for the wavelength of light propagating through the second optical waveguide 30 is improved. By providing the first layered body 120 and the second layered body 130 individually in this manner, not only the layered bodies can be integrated in a step described later, but also heat treatment suitable for each of the layered bodies can be performed in advance. Accordingly, each of the layered bodies is not subjected to unnecessary thermal damage. If the second layered body 130 is annealed at a predetermined temperature or more, the structure of the second core 33 would change from amorphous to crystalline. Such a structural change can be suppressed, and a desired waveguide can be formed.

A difference between a height h1 (see FIG. 4B) from the center of the first core 23 of the first layered body 120 in the height direction to the upper surface of the first protective layer and a height h2 (see FIG. 5B) from the center of the second core 33 of the second layered body 130 in the height direction to the upper surface of the second protective layer 340 is 500 nm or less and preferably 100 nm or less. By forming each of the first layered body 120 and the second layered body 130 by the CVD method or the PVD method, the difference between h1 and h2 can be controlled to be approximately 500 nm or less and preferably approximately 100 nm or less. Accordingly, when the first layered body 120 and the second layered body 130 are integrated on a substrate 11 in a subsequent step, the first layered body 120 and the second layered body 130 are arranged such that a difference between the distance from the upper end of the second cladding 24 to the center of the first core 23 and the distance from the upper end of the second protective layer 340 to the center of the second core 33 is 500 nm or less. By setting the difference between h1 and h2 to be 500 nm or less, 100 nm or less, 50 nm or less, or 30 nm or less, optical coupling can be efficiently performed. The alignment of the optical axes in a plane parallel to the substrate is achieved by forming the optical waveguides with the first layered body 120 and the second layered body 130 being bonded onto the common substrate 11, which will be described later.

### <Fixing Layered Bodies to Temporary Substrate>

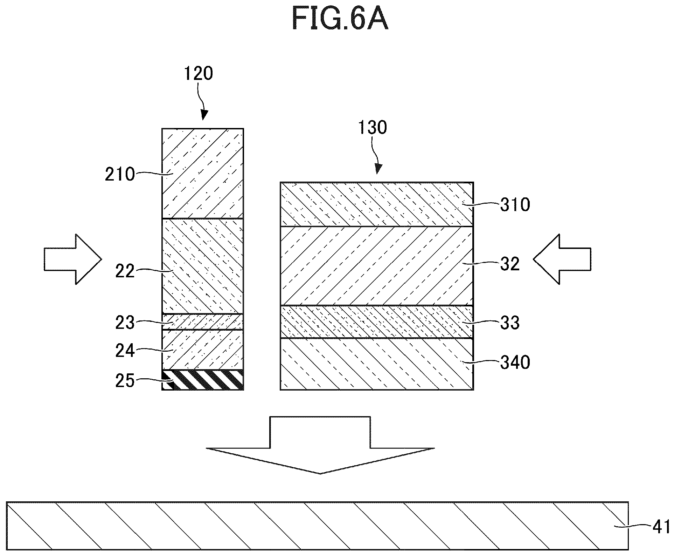

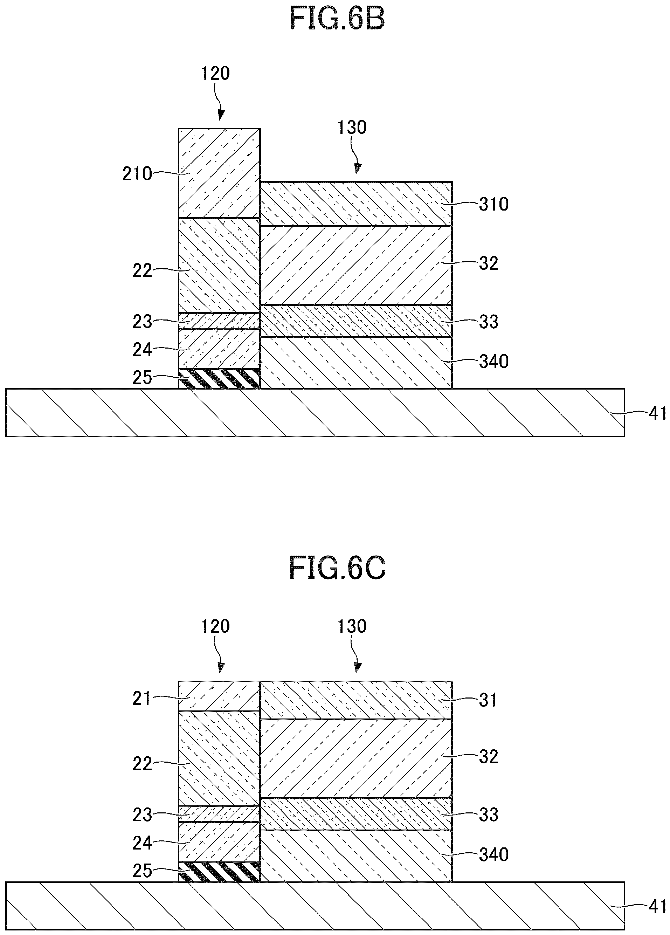

FIG. 6A to FIG. 6F are diagrams illustrating a manufacturing process diagrams of the optical circuit using the provided first layered body 120 and second layered body 130. As illustrated in FIG. 6A and FIG. 6B, the first layered body 120 and the second layered body 130 are arranged side by side such that the first core 23 and the second core 33 face each other, and the first protective layer 25 and the second protective layer 340 are fixed to the temporary substrate 41.

In FIG. 6A, the first protective layer 25 of the first layered body 120 and the second protective layer 340 of the second layered body 130 are fixed to the temporary substrate 41 while the end surface of the first core 23 of the first layered body 120 and the end surface of the second core 33 of the second layered body 130 face each other. The temporary substrate 41 is preferably formed of a material such as silicon that is easily etched. The first protective layer 25 and the second protective layer 340 are fixed to the temporary substrate 41 by any bonding method such as atomic diffusion bonding, hydroxyl group bonding, or surface activated bonding. Accordingly, as illustrated in FIG. 6B, the first layered body 120 and the second layered body 130 are arranged on the temporary substrate 41. At this time, the height of the first layered body 120 and the height of the second layered body 130 do not have to be aligned.

In FIG. 6C, at least one of the substrate 210 or the substrate 310 is polished to obtain a first substrate 21 and a second substrate 31. By processing the first substrate 21 and the second substrate 31 in a state in which the first layered body 120 and the second layered body 130 are fixed to the temporary substrate 41, the height of the first layered body 120 and the height of the second layered body 130 are aligned on the temporary substrate 41. The height of the first layered body 120 and the height of the second layered body 130 may be aligned by any method. For example, the first layered body 120 may be ground such that the thickness of the substrate 210 of the first layered body 120 is reduced to a certain extent, and then the surfaces of the substrate 210 and the substrate 310 may be polished and planarized. As another method, a layer of a metal, a semiconductor, an insulator, or the like may be deposited on the substrate 210 and the substrate 310, and then the surfaces of the substrate 210 and the substrate 310 may be polished and planarized. In FIG. 6C, by grinding and polishing the substrate 210, the height of the polished surface of the first substrate 21 is aligned with the height of the surface of the second substrate 31. By aligning the heights of the first layered body 120 and the second layered body 130 before the layered bodies are transferred to the substrate 11, the alignment of the heights of the optical axes can be maintained after the first layered body 120 and the second layered body 130 are bonded to the substrate 11.

### <Bonding to Substrate 11>

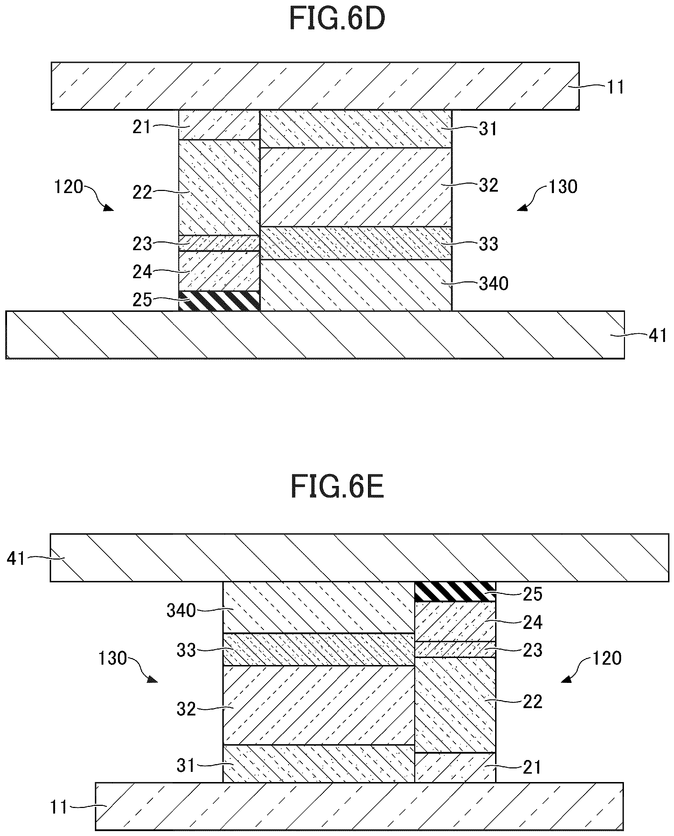

In FIG. 6D, the substrate 11 is bonded to the surfaces opposite to the surfaces of the first layered body 120 and the second layered body 130 fixed to the temporary substrate 41. The substrate 11 is bonded to the first substrate 21 and the second substrate 31 by an appropriate method. The bonding method may be, for example, surface activated bonding, atomic diffusion bonding, or hydroxyl group bonding. The substrate 11 is preferably bonded to the first substrate 21 and the second substrate 31 at a relatively low temperature. From this viewpoint, surface activated bonding or atomic diffusion bonding is preferable. The temperature needed for bonding may be, for example, 100°C or less, 50°C or less, or 40°C or less.

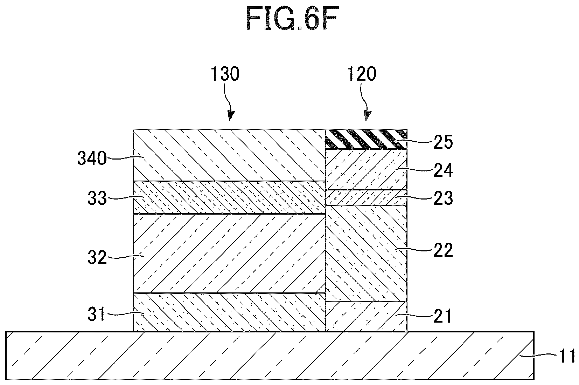

A structure obtained by bonding the substrate 11 is turned upside down in FIG. 6E, and the temporary substrate 41 is removed in FIG. 6F. As a result, the first layered body 120 and the second layered body 130 are arranged adjacent to each other on the substrate 11. A method of removing the temporary substrate 41 is not particularly limited. For example, after the thickness of the temporary substrate 41 is reduced by grinding, the remaining portion may be removed by etching.

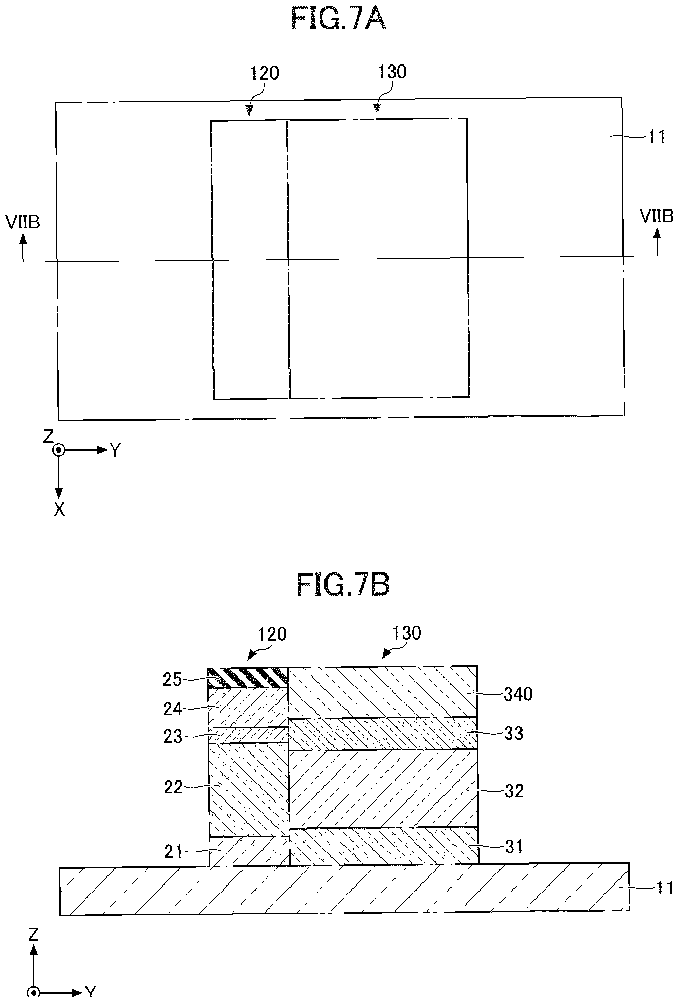

FIG. 7A and FIG. 7B illustrate a bonded state of the first layered body 120 and the second layered body 130 on the substrate 11. FIG. 7A is a top view of a structure on the substrate 11 after the temporary substrate 41 is removed. FIG. 7B is a VIIB-VIIB cross section of FIG. 7A. Although the waveguides are not yet formed in the first layered body 120 and the second layered body 130, the central axis of the first core 23 in the layered direction (Z direction) is located within the thickness of the second core 33. Further, the central axis of the second core 33 in the layered direction (Z direction) is located within the thickness of the first core 23. This configuration is an example configuration that can improve optical coupling efficiency; however, the first core 23 and the second core 33 may be optically coupled with another optical waveguide interposed therebetween. The second protective layer 340 may be used as the fourth cladding 34 in a subsequent step. Alternatively, the second protective layer 340 may be removed and a new fourth cladding 34 may be provided.

### <Forming Waveguides>

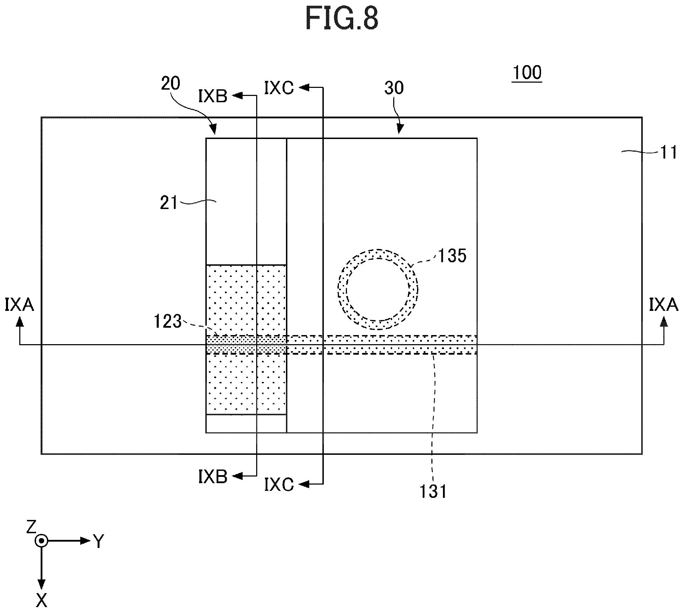

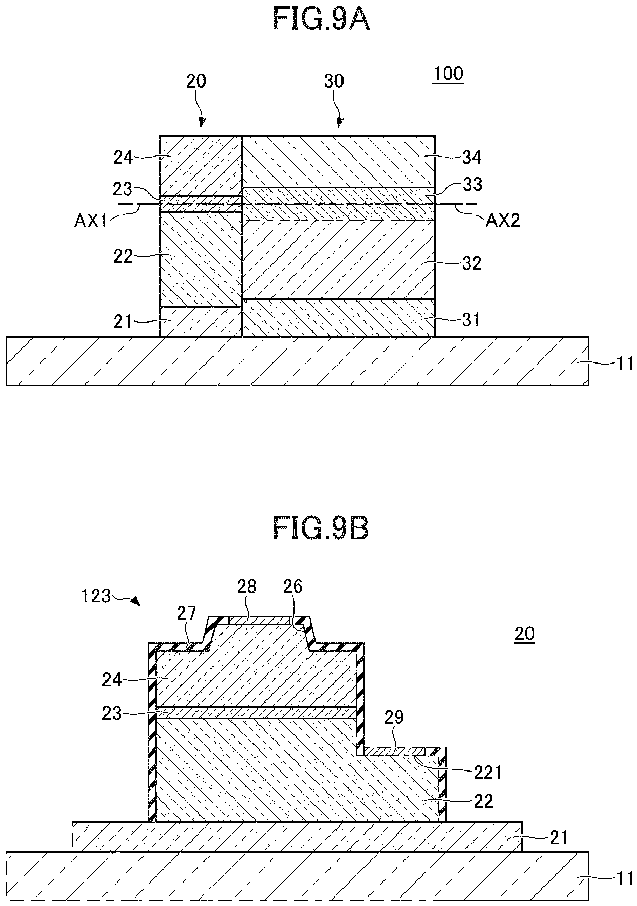

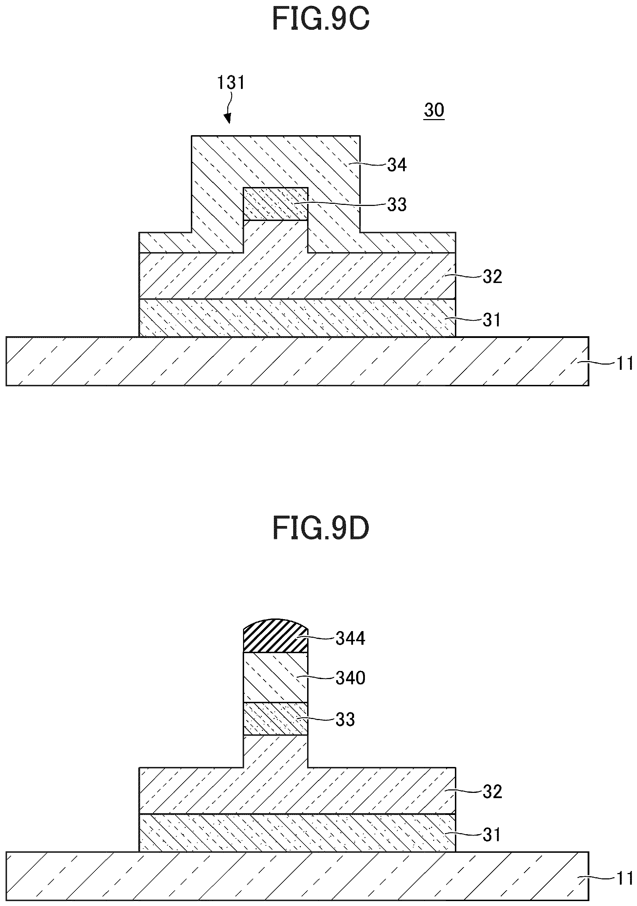

FIG. 8 is a top view illustrating formation of the waveguides by processing the layered bodies. FIG. 9A is a cross section taken through IXA-IXA of FIG. 8. FIG. 9B is a cross section taken through IXB-IXB of FIG. 8. FIG. 9C is a cross section taken through IXC-IXC of FIG. 8. In FIG. 8, the first optical waveguide 20 and the second optical waveguide 30 are formed by processing the first layered body 120 and the second layered body 130 (see FIG. 7A and FIG. 7B), which are bonded to the substrate 11. The first layered body 120 and the second layered body 130 may be processed in any order. Layers that can be etched at the same time depending on materials may be etched at the same time in one step. For example, the first optical waveguide 20 and the second optical waveguide 30 may be obtained by processing the first layered body 120 and the second layered body 130 by reactive ion etching through a mask formed with a certain width on the first layered body 120 and the second layered body 130. The first optical waveguide 20 and the second optical waveguide 30 are obtained by sequentially processing the first layered body 120 and the second layered body 130 by using etching gases that provide suitable selectivity ratio for the first layered body 120 and the second layered body 130.

By processing the first layered body 120, the first optical waveguide 20 including the first cladding 22, the first core 23, and the second cladding 24 is obtained. The first optical waveguide 20 includes a linear waveguide 123, including an active layer, at least at an end portion of the first optical waveguide 20 closer to the second optical waveguide 30. By processing the second layered body 130, the second optical waveguide 30 including at least the third cladding 32 and the second core 33 is obtained. The fourth cladding 34 may be the same as or different from the second protective layer 340 as described above. The second protective layer 340 or the fourth cladding 34 does not have to remain to the end. The second optical waveguide 30 may include a waveguide 131 and a ring resonator 135. The waveguide 131 may be a linear waveguide or may include a curved waveguide. At least a portion of the second core 33 of the second optical waveguide 30 may include an amorphous material. For example, at least one of the waveguide 131 or the ring resonator 135 may be a low-loss amorphous waveguide in which the second core 33 is formed of SiN, SiON, Ta₂O₅, Nb₂O₅, TiO₂, HfO₂, AlN, or a mixed material thereof.

In the IXA-IXA cross section of FIG. 9A, an extension line of a first optical axis AX1 of the first core 23 overlaps the second core 33. Further, an extension line of a second optical axis AX2 of the second core 33 overlaps the first core 23. The alignment of the first optical axis AX1 and the second optical axis AX2 in a direction perpendicular to the substrate 11 is achieved by adjusting the height of the second protective layer 340 when the second layered body 130 is fixed to the temporary substrate 41. The alignment of the first optical axis AX1 and the second optical axis AX2 in a plane parallel to the substrate 11 is achieved by sequentially or simultaneously processing the first layered body 120 and the second layered body 130, bonded onto the substrate 11, so as to form the waveguides. Accordingly, highly efficient optical coupling can be achieved by a relatively simple process similar to a CMOS process. FIG. 9A illustrates an example of highly efficient optical coupling. However, as described above, in a cross section orthogonal to the first optical axis AX1 or the second optical axis AX2, the first optical axis AX1 and the second optical axis AX2 can be deviated from each other within a range in which optical coupling is possible. The first optical waveguide 20 and the second optical waveguide 30 can be optically coupled to each other with a third optical waveguide interposed therebetween.

In the IXB-IXB cross section of FIG. 9B, as an example, a step 221 is formed in the first cladding 22 of the first optical waveguide 20, and a ridge 26 is formed in the second cladding 24. The step 221 and the ridge 26 can be formed by dry etching. After the step 221 and the ridge 26 are formed, the entire first optical waveguide 20 is covered by an insulating film 27. A portion of the insulating film 27 is removed, an electrode 28 electrically connected to the second cladding 24 is formed, and an electrode 29 electrically connected to the first cladding 22 is formed. As a result, the first optical waveguide 20 is completed. In this example, the second cladding 24 includes a p-side nitride semiconductor, and a p-side contact layer may be provided between the second cladding 24 and the electrode 28. The linear waveguide 123 can be formed by the active layer included in the first core 23 interposed between the first cladding 22 and the second cladding 24. The active layer is formed of, for example, a quantum well, and is excited by injection of carriers to emit light in a desired wavelength range. For example, in a case where the linear waveguide 123 of the first optical waveguide 20 is an edge emitting laser element, light is amplified while reciprocating in the linear waveguide 123, which is defined by the width of the ridge 26, in a direction perpendicular to the drawing sheet. Then, the light is output as laser light and coupled to the second core 33 of the second optical waveguide 30.

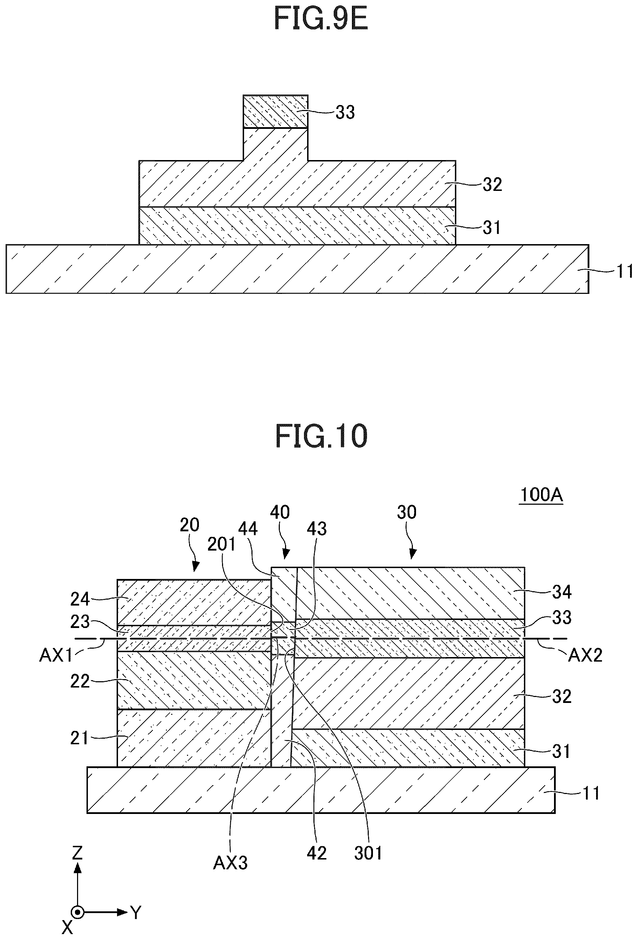

In the IXC-IXC cross section of FIG. 9C, the second optical waveguide 30 is a perfect refractive index type waveguide. That is, a ridge including the third cladding 32, the second core 33, and the fourth cladding 34 is formed. Accordingly, in the second optical waveguide, light confinement can be enhanced and a bending loss can be reduced. At least a portion of the third cladding 32, the second core 33, and the fourth cladding 34 includes an amorphous material. With this configuration, a difference in refractive index between the core and each of the claddings can be increased, and thus light confinement can be enhanced. Therefore, in the second optical waveguide 30, a bending loss of a curved waveguide such as the ring resonator 135 can be reduced. For example, the second optical waveguide 30 can be produced as follows. That is, as illustrated in FIG. 9D, the second protective layer 340 of the second layered body 130, at least a portion of the second core 33, and at least a portion of the third cladding 32 may be removed through a mask 344. Subsequently, as illustrated in FIG. 9E, the second protective layer 340 and the mask 344 are removed. The second optical waveguide 30 is formed by layering the fourth cladding 34 so as to cover the third cladding 32 and the second core 33 that remain without being removed. As a result, a perfect refractive index type waveguide having strong light confinement is formed. The material of the fourth cladding 34 may be the same as the material of the third cladding 32. The width of the waveguide 131 may be slightly different from the width of the ridge 26 because of the refractive index of the material. The waveguide 131 may be formed by processing the second core 33 into a ridge shape without providing the fourth cladding 34. In this case, an air layer functions as a cladding.

In the optical circuit 100 according to the first embodiment, waveguides formed of different materials can be coupled with high efficiency. With the configuration of the optical circuit 100, an active waveguide, such as a laser light source, a light receiving element, or a modulation element, and a passive waveguide formed of a material different from the material of the active waveguide can be efficiently coupled to each other.

### <Second Embodiment>

FIG. 10 is a schematic diagram illustrating an optical circuit 100A according to a second embodiment. Similar to FIG. 2B, in a coordinate system of FIG. 10, a direction in which light is guided is a Y direction, and a layered direction or a direction perpendicular to a substrate 11 is a Z direction, and a direction orthogonal to the Y direction and the Z direction is an X direction. The optical circuit 100A includes a third optical waveguide 40 disposed on the substrate 11 and between a first optical waveguide 20 and a second optical waveguide 30. The third optical waveguide 40 includes a fifth cladding 42, a sixth cladding 44, and a third core 43 disposed between the fifth cladding 42 and the sixth cladding 44. The third optical waveguide 40 includes an amorphous material. One end portion of the third optical waveguide 40 is optically coupled to a first core 23, and the other end portion of the third optical waveguide 40 is optically coupled to a second core 33. The fifth cladding 42, the sixth cladding 44, and the third core 43 of the third optical waveguide 40 may be amorphous. The first optical waveguide 20 and the second optical waveguide 30 are optically coupled to each other via the third optical waveguide 40 interposed therebetween. In a cross section along the ZX plane, the third optical waveguide 40 may be a perfect refractive index type waveguide, similarly to the second optical waveguide 30. That is, a ridge including the fifth cladding 42, the third core 43, and the sixth cladding 44 may be formed. The sixth cladding 44 may cover the lateral surface of the third core 43.

In a case where either or both of the first layered body 120 and the second layered body 130 are formed by cleavage, one or both of the surface of the first optical waveguide 20 and the surface of the second optical waveguide 30 facing each other may be inclined with respect to a plane perpendicular to the substrate 11 depending on a crystal plane of the substrate. In such a case, the distance between the first optical waveguide 20 and the second optical waveguide 30 is limited by the angle of the crystal plane. Therefore, the amorphous third optical waveguide 40 is disposed between the first optical waveguide 20 and the second optical waveguide 30 to maintain coupling efficiency. As illustrated in FIG. 10, the third optical waveguide 40 is disposed between a first end surface 201 of the first optical waveguide 20 and a second end surface 301 of the second optical waveguide 30. At least one of the first end surface 201 or the second end surface 301 is inclined with respect to the normal to the substrate 11. By filling an inclined space between the first end surface 201 and the second end surface 301 with the amorphous third optical waveguide, a loss between the first core 23 and the second core 33 can be reduced.

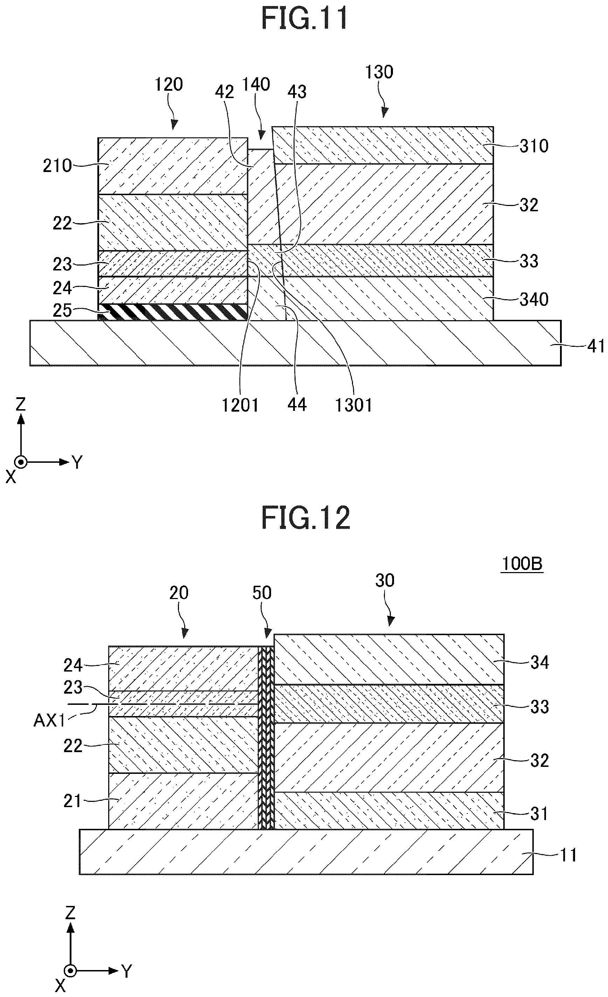

FIG. 11 is a cross-sectional view of layered bodies fixed to a temporary substrate 41 in the process of manufacturing the optical circuit 100A. A first layered body 120 and a second layered body 130, which are provided in advance, are arranged side by side and are fixed to the temporary substrate 41 (see FIG. 6A and FIG. 6B). At this time, a first end surface 1201 of the first layered body 120 and a second end surface 1301 of the second layered body 130 are not in contact with each other and face each other with a gap therebetween. This makes it easy to form a third layered body 140 between the first layered body 120 and the second layered body 130. At least one of the first end surface 1201 including the first core 23 of the first layered body 120 or the second end surface 1301 including the second core 33 of the second layered body 130 is inclined with respect to the normal to the temporary substrate 41, and the third layered body 140 is formed between the first end surface 1201 of the first layered body 120 and the second end surface 1301 of the second layered body 130.

The third layered body 140 is formed by growing the sixth cladding 44, the third core 43, and the fifth cladding 42 in this order between the first layered body 120 and the second layered body 130. By using a deposition method having high straightness such as a sputtering method, a gap between the first end surface 1201 of the first layered body 120 and the second end surface 1301 of the second layered body 130 can be filled. After the third layered body 140 is formed, the upper surfaces of the first layered body 120, the second layered body 130, and the third layered body 140 are planarized and bonded to the substrate 11. After the temporary substrate 41 is removed, the third layered body 140 is processed together with the first layered body 120 and the second layered body 130. Accordingly, the third optical waveguide 40 including the fifth cladding 42, the third core 43, and the sixth cladding 44 is obtained. The thickness of the third core 43 in the Z direction may be 0.5 times or more and 2 times or less the thickness of the second core 33 in the Z direction. The width of the third core 43 in the X direction may be 0.8 times or more and 1.2 times or less the width of the second core 33 in the X direction. The length of the third optical waveguide 40 in the optical axis direction may be 5 um or more and 600 um or less, 30 um or more and 500 um or less, or 100 um or more and 400 um or less. With the above ranges, the influence of a loss of the third optical waveguide 40 is reduced. In addition, the third layered body 140 can be easily formed by the sputtering method.

Returning to FIG. 10, in the Z direction perpendicular to the substrate 11, the position of a third optical axis AX3 of the third optical waveguide 40 is aligned with the position of a first optical axis AX1 of the first optical waveguide 20 and the position of a second optical axis AX2 of the second optical waveguide 30 within a range in which optical coupling is possible. In the XY plane parallel to the upper surface of the substrate 11, the first core 23, the third core 43, and the second core 33 are aligned in the X direction and the Y direction by etching the third layered body 140 through a mask formed with a constant width on the first layered body 120, the third layered body 140, and the second layered body 130. Accordingly, highly efficient optical coupling is achieved. A waveguide formed by the third core 43 of the third optical waveguide 40 does not have to be a linear waveguide. The first optical axis AX1 and the second optical axis AX2 may be offset from each other in the X direction in the XY plane parallel to the substrate 11. In this case, the third optical axis AX3 connects the first optical axis AX1 and the second optical axis AX2, and thus optical coupling in the Y direction is achieved in the XY plane.

Depending on the angle of a crystal plane of the first layered body 120 or the second layered body 130, when the first layered body 120 and the second layered body 130 are arranged side by side as in the step of FIG. 6A and FIG. 6B, the first layered body 120 and the second layered body 130 may be fixed to the temporary substrate 41 with a thin plate interposed therebetween. Then, after the first layered body 120 and the second layered body 130 are fixed to the temporary substrate 41, the thin plate may be removed so as to secure a gap. This gap may be filled with the sixth cladding 44, the third core 43, and the fifth cladding 42 in this order by the PVD method or the CVD method so as to obtain the third layered body 140 formed of an amorphous material. By disposing the third optical waveguide 40 formed of an amorphous material between the first optical waveguide 20 and the second optical waveguide 30, a loss between the first core 23 and the second core 33 can be reduced.

The third layered body 140 and the third optical waveguide 40 may be formed without being limited to the above example. For example, even if the first end surface 201 and the second end surface 301 are parallel to each other, particularly even if the first end surface 201 and the second end surface 301 are perpendicular to the upper surface of the substrate 11, the third optical waveguide 40 may be provided by forming and processing the third layered body 140. For example, a loss of optical coupling is reduced by adjusting materials such that the equivalent refractive index of the third optical waveguide 40 is between the equivalent refractive indices of the first optical waveguide 20 and the second optical waveguide 30. In addition, if a difference between the equivalent refractive index of the first optical waveguide 20 and the equivalent refractive index of the second optical waveguide 30 is sufficiently small, the material of the third optical waveguide 40 may be the same as the material of the second optical waveguide 30.

### <Third Embodiment>

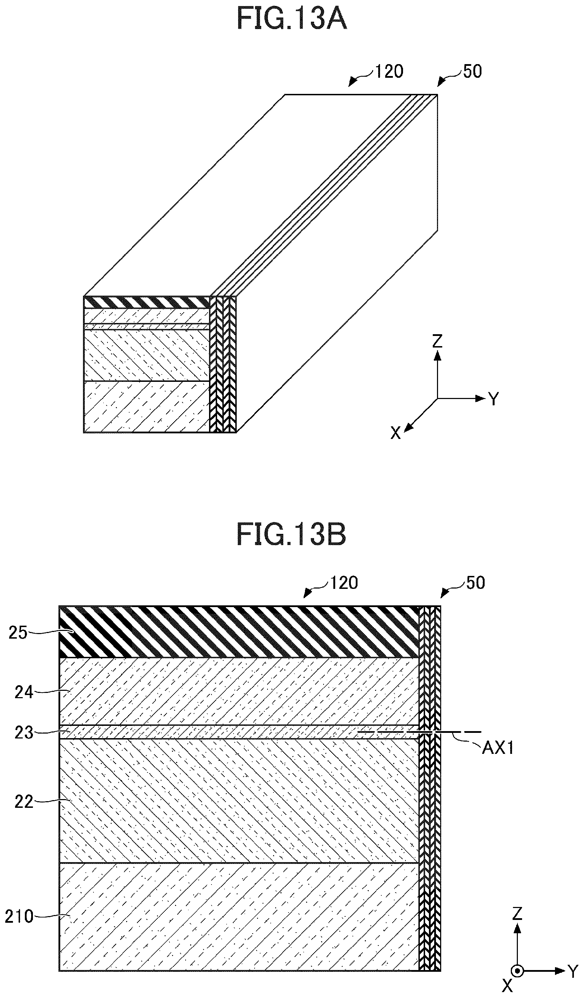

FIG. 12 is a schematic diagram illustrating an optical circuit 100B according to a third embodiment. FIG. 13A is a perspective view of a first layered body including a dielectric multilayer film. FIG. 13B is a lateral side view of the first layered body of FIG. 13A, which is parallel to the YZ plane. In the optical circuit 100B, a first optical waveguide 20 includes a dielectric multilayer film 50 formed on an end portion of the first optical waveguide 20 closer to the second optical waveguide 30. A direction in which the dielectric multilayer film 50 is layered is parallel to a first optical axis AX1 of the first optical waveguide 20. As illustrated in FIG. 13A and FIG. 13B, when the optical circuit 100B is manufactured, in a step of providing a first layered body 120, the dielectric multilayer film 50 that is layered in a direction different from the layered direction of the first layered body 120, is formed at the end portion of the first layered body 120 facing the second layered body 130. The first layered body 120 and the second layered body 130 (see FIG. 6B and the like) are fixed to a temporary substrate such that a first core 23 and a second core 33 face each other and the dielectric multilayer film 50 is located between the first layered body 120 and the second layered body 130. In FIG. 13A and FIG. 13B, the layered direction of the first layered body 120 is the Z direction, and the layered direction of the dielectric multilayer film 50 is the Y direction in which light is guided.

The dielectric multilayer film 50 is formed by alternately layered materials having different refractive indices, and suppresses reflection caused by a difference in refractive index between the first core 23 and the second core 33. As a low-refractive index material of the dielectric multilayer film 50, SiO₂, MgF₂, or the like may be used. As a high-refractive index material, TiO₂, Ta₂O₅, Al₂O₃, HfO₂, or the like may be used. By providing the dielectric multilayer film 50 between the first optical waveguide 20 and the second optical waveguide 30, unnecessary reflection is suppressed, and light generated in the first optical waveguide 20 is efficiently transmitted to the second optical waveguide 30.

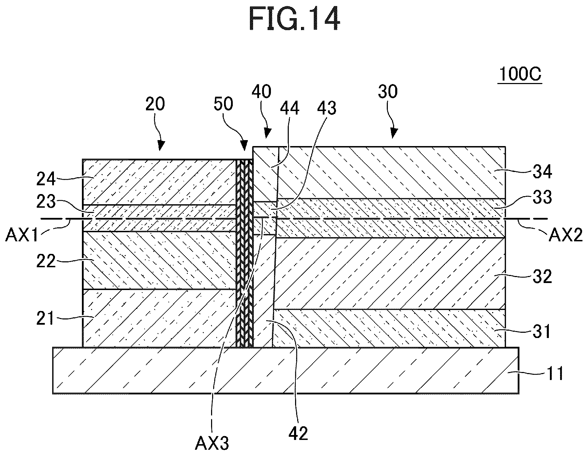

FIG. 14 is a cross-sectional view of an optical circuit 100C according to a modification of the optical circuit 100B. The optical circuit 100C is a combination of the optical circuit 100A according to the second embodiment and the optical circuit 100B according to the third embodiment. The optical circuit 100C includes a third optical waveguide 40 and a dielectric multilayer film 50 between a first optical waveguide 20 and a second optical waveguide 30. The dielectric multilayer film 50 is preferably provided on the side where a difference in refractive index from the third optical waveguide 40 is large. With this configuration, Fresnel reflection can be reduced. In the example of FIG. 14, in a case where a third core 43 of the third optical waveguide 40 is formed of an amorphous material such as SiN, SiON, Ta₂O₅, Nb₂O₅, TiO₂, HfO₂, AlN, or LN, the dielectric multilayer film 50 may be provided between the third optical waveguide 40 and the first optical waveguide 20. This is because a difference in refractive index between the third optical waveguide 40 and the second optical waveguide 30 is small, and reflection at the interface between the third optical waveguide 40 and the second optical waveguide 30 is reduced.

### <Fourth Embodiment>

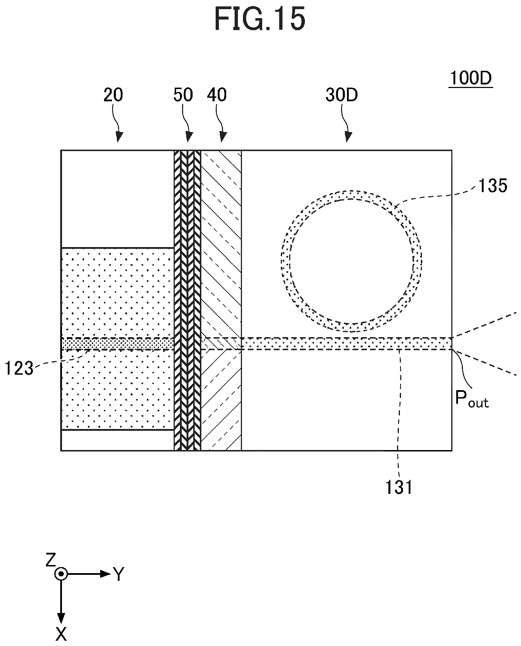

FIG. 15 is a top view of an optical circuit 100D according to a fourth embodiment. The optical circuit 100D includes a second optical waveguide 30D optically coupled to a first optical waveguide 20. The optical circuit 100D includes a third optical waveguide 40 between the first optical waveguide 20 and the second optical waveguide 30D, and a dielectric multilayer film 50 between the first optical waveguide 20 and the third optical waveguide 40. The second optical waveguide 30D includes a ring resonator 135 optically coupled to a waveguide 131 through which light guided from the first optical waveguide 20 passes. A resonator (e.g., a first resonator) is formed between the first optical waveguide 20 and the ring resonator 135. The optical circuit 100D is used as a laser light source with a resonator.

In this example, both end surfaces of the first optical waveguide 20 in the waveguide direction are mirror surfaces, and the first optical waveguide 20 is used as an edge emitting semiconductor laser element. The dielectric multilayer film 50 may be used as one of the mirror surfaces. By injection of carriers, light is generated in a linear waveguide 123 including an active layer of the first optical waveguide 20. The generated light is coupled to the waveguide 131 of the second optical waveguide 30D. The coupled light is coupled to the ring resonator 135. Then the light coupled to the ring resonator 135 circulates counterclockwise. A portion of the light coupled to the ring resonator 135 is backscattered and circulates clockwise in the ring resonator 135. The backscattered light is coupled to the waveguide 131 and provides optical feedback to the first optical waveguide 20. The light having a wavelength selected by circulation in the ring resonator 135 is emitted from an output port Pout.

The ring resonator 135 is formed by an etching process and serves as a passive waveguide together with the waveguide 131. When the resonator is formed between the ring resonator 135 and the first optical waveguide 20, selectivity of oscillation wavelengths can be increased, and the spectral linewidth of the light source can be narrowed. The end surface of the second optical waveguide 30D serves as the output port Pout, and the active layer of the linear waveguide 123 is not exposed at the end surface, and thus the possibility of a catastrophic failure of a light source device can be reduced.

Each of a third cladding 32, a second core 33, and a fourth cladding 34 of the second optical waveguide 30D may include an amorphous material. This makes it possible to select materials that have a large refractive index difference between the core and each of the claddings, and thus light confinement can be enhanced. In addition, the enhancement of light confinement allows a bending loss of a curved waveguide such as the ring resonator to be reduced.

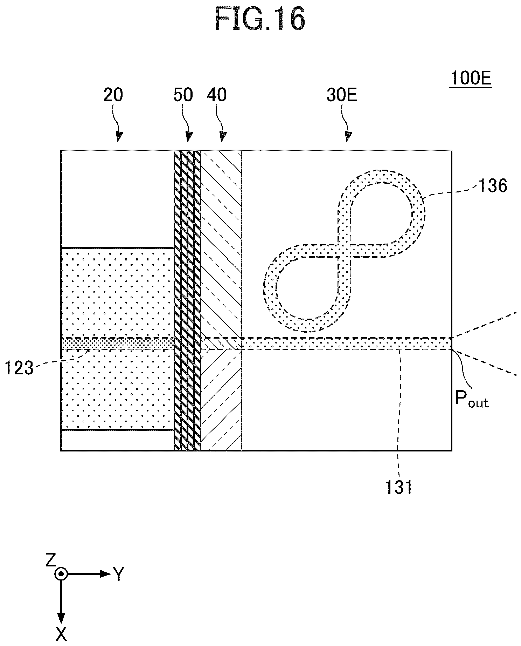

FIG. 16 is a top view of an optical circuit 100E according to a first modification of the fourth embodiment. The optical circuit 100E includes a third optical waveguide 40 between a first optical waveguide 20 and a second optical waveguide 30E, and a dielectric multilayer film 50 between the first optical waveguide 20 and the third optical waveguide 40. Similar to the optical circuit 100D of FIG. 15, the first optical waveguide 20 of FIG. 16 is used as an edge emitting semiconductor laser element. The second optical waveguide 30E of the optical circuit 100E includes a figure-eight ring resonator 136 as a ring resonator of a passive waveguide. The figure-eight ring resonator 136 can be formed by the same process as a waveguide 131 by etching a second layered body 130. The optical circuit 100E is also used as a laser light source with a resonator. A resonator is formed between the first optical waveguide 20 and the figure-eight ring resonator 136. Light having a wavelength strengthened and selected between the ring resonator 136 and the first optical waveguide 20 exits from the output port Pout. Similar to the optical circuit 100D of FIG. 15, selectivity of oscillation wavelengths can be increased, and the spectral linewidth of the light source can be narrowed. In addition, an active layer is not exposed at the light exit end of a linear waveguide 123, and thus the possibility of a catastrophic failure can be reduced. Further, in a case where the laser light source is used as a light source of an optical gyro sensor, frequency fluctuations of the light source due to rotation can be reduced.

Each of a third cladding 32, a second core 33, and a fourth cladding 34 of the second optical waveguide 30E may include an amorphous material. This makes it possible to select materials that have a large refractive index difference between the core and each of the claddings, and thus light confinement can be enhanced. In addition, the enhancement of light confinement allows a bending loss of a curved waveguide such as the ring resonator to be reduced.

The figure-eight ring resonator 136 can also be referred to as a ring resonator 136 having two closed regions surrounded by optical waveguides. The ring resonator 136 includes two linear waveguides that intersect each other and two curved waveguides that are connected to the linear waveguides. A smaller angle of the angles formed by the two intersecting linear waveguides may be 80 degrees or more and 90 degrees or less, or 89 degrees or more and 90 degrees or less. When the angles formed by the two linear waveguides are each 90 degrees, light can circulate in the ring resonator 136 most efficiently. The area of one region of the two closed regions surrounded by the optical waveguides may be 0.9 times or more and 1 time or less, or 0.98 times or more and 1 time or less the area of the other region. When the two closed regions surrounded by the optical waveguides have the same area, frequency fluctuations of the light source due to rotation are canceled. This is because the Sagnac effect is proportional to the area of each of the closed regions surrounded by the optical waveguides.

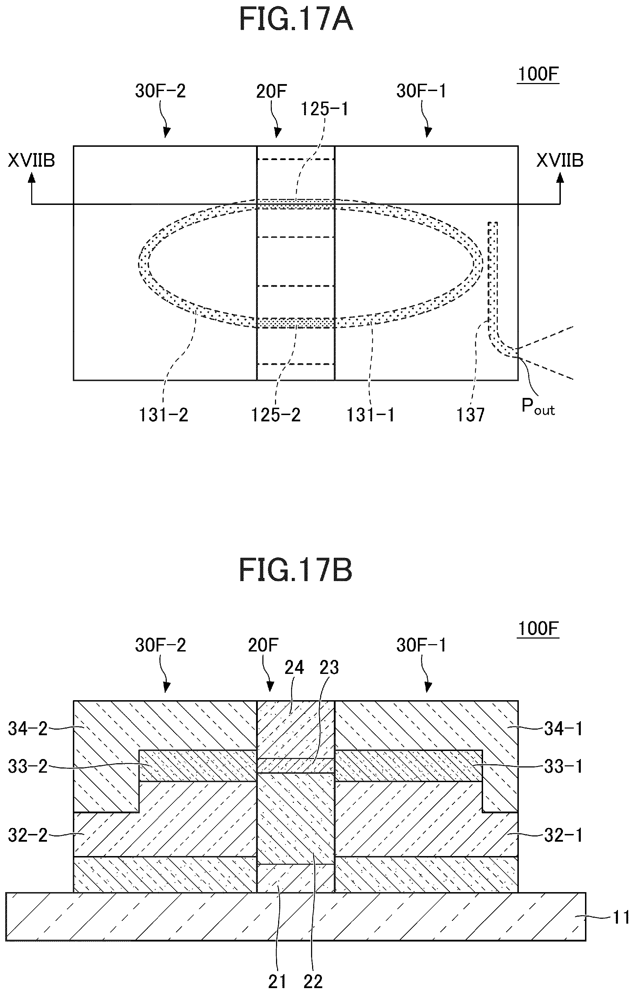

FIG. 17A is a top view of an optical circuit 100F according to a second modification of the fourth embodiment. FIG. 17B is a cross-sectional view taken through XVIIB-XVIIB of FIG. 17A. Both FIG. 17A and FIG. 17B illustrate a state before electrodes are formed. The optical circuit 100F includes a first optical waveguide 20F and second optical waveguides 30F-1 and 30F-2 disposed on opposite sides of the first optical waveguide 20F in the optical axis direction of the first optical waveguide 20F. The first optical waveguide 20F include a first active layer 125-1 and a second active layer 125-2 provided in parallel. The first active layer 125-1 and the second active layer 125-2 are formed in a first core 23. A direction along the first active layer 125-1 and the second active layer 125-2 is the optical axis direction of the first optical waveguide 20F.

The second optical waveguide 30F-1 includes a first curved waveguide 131-1 disposed on one side of the first optical waveguide 20F. The second optical waveguide 30F-2 includes a second curved waveguide 131-2 disposed on the other side of the first optical waveguide 20F. The first curved waveguide 131-1 is optically coupled to the first active layer 125-1 and the second active layer 125-2 on the one side of the first optical waveguide 20F, and the second curved waveguide 131-2 is connected to the first active layer 125-1 and the second active layer 125-2 on the other side of the first optical waveguide 20F. The first optical waveguide 20F, the first curved waveguide 131-1, and the second curved waveguide 131-2 form a resonator (e.g., a second resonator).

As illustrated in FIG. 17B, the first curved waveguide 131-1 includes a second core 33-1 interposed between a third cladding 32-1 and a fourth cladding 34-1. As illustrated in FIG. 17B, the second curved waveguide 131-2 includes a second core 33-2 interposed between a third cladding 32-2 and a fourth cladding 34-2. The first curved waveguide 131-1 and the second curved waveguide 131-2 may be low-loss passive waveguides formed of an amorphous material. This makes it possible to select materials that have a large refractive index difference between a core and a cladding, and thus light confinement can be enhanced. In addition, the enhancement of light confinement allows a bending loss of a curved waveguide to be reduced. Light generated and amplified by the first active layer 125-1 and the second active layer 125-2 circulates in a ring formed by the first curved waveguide 131-1 and the second curved waveguide 131-2, and an oscillation wavelength is selected. Either the second optical waveguide 30F-1 or the second optical waveguide 30F-2 is provided with a waveguide 137 for light extraction and an output port Pout connected to the waveguide 137. Accordingly, a ring-resonator-type laser light source is formed in the optical circuit 100F. Similar to the optical circuits 100D and 100E, the optical circuit 100F can increase selectivity of oscillation wavelengths, and narrow the spectral linewidth of the light source. In addition, the first active layer 125-1 and the second active layer 125-2 are not exposed at the light exit ends, and thus the possibility of a catastrophic failure can be reduced.

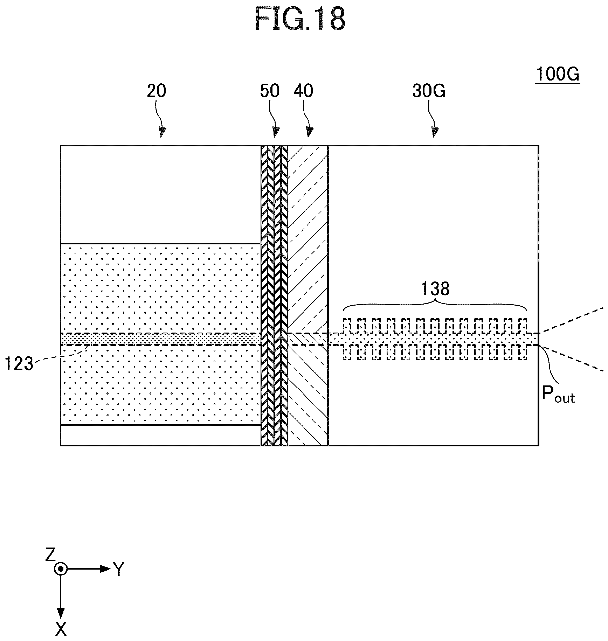

FIG. 18 is a schematic diagram illustrating an optical circuit 100G according to a third modification of the fourth embodiment. The optical circuit 100G has a light reflective structure 138 formed by a waveguide of a second optical waveguide 30G, and a resonator (e.g., a third resonator) is formed between a first optical waveguide 20 and the light reflective structure 138. In the example of FIG. 18, the light reflective structure 138 is a distributed Bragg reflector (DBR). The surface of the first optical waveguide 20 opposite to the surface facing the second optical waveguide 30G serves as a reflective surface. Light reciprocates between this reflective surface and the light reflective structure 138, and oscillates at a wavelength determined by the periodic structure of the DBR. An end portion of the light reflective structure 138 opposite to the first optical waveguide 20 is connected to an output port Pout from which laser light having a narrow linewidth exits. The light reflective structure 138 may be formed of an amorphous material. In this case, a low-loss DBR is formed. The optical circuit 100G can also increase selectivity of oscillation wavelengths, and narrow the linewidth of a light source. Further, an active layer is not exposed at the light exit end, and thus the possibility of a catastrophic failure can be reduced.

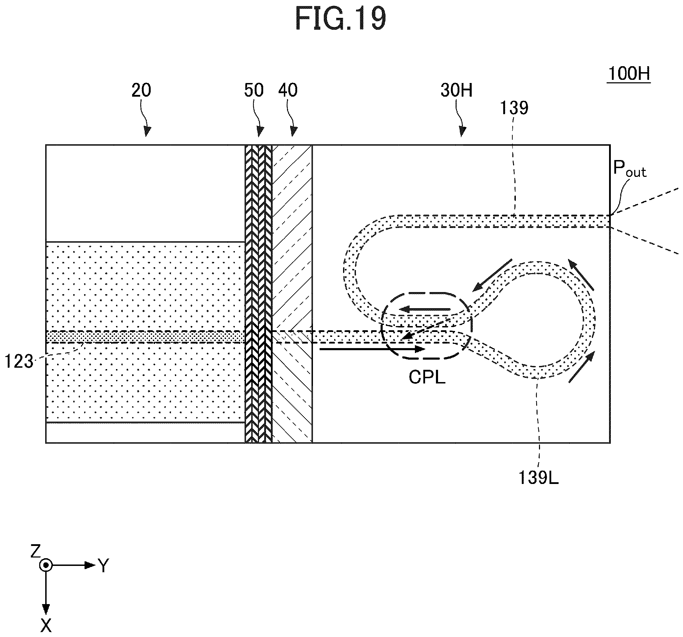

FIG. 19 is a schematic diagram illustrating an optical circuit 100H according to a fourth modification of the fourth embodiment. The optical circuit 100H has a light reflective structure formed by a directional coupler CPL and a curved waveguide 139L of a second optical waveguide 30H. In this example, both ends of the curved waveguide 139L are connected to the directional couplers CPL. The surface of a first optical waveguide 20 opposite to the surface facing the second optical waveguide 30H serves as a reflective surface. The optical circuit 100H constitutes a laser light source including a resonator formed by the reflective surface of the first optical waveguide 20 and the curved waveguide 139L. The curved waveguide 139L is connected to an outlet port Pout. The curved waveguide 139L may be formed of an amorphous material. In this case, a low-loss light reflective structure is formed. The optical circuit 100H can obtain any reflectance by adjusting the distance for optical coupling in the directional coupler CPL and the interval between optical waveguides facing each other. In addition, an active layer is not exposed at the light exit end of a linear waveguide 123, and thus the possibility of a catastrophic failure can be reduced.

Each of the optical circuits 100D to 100E described with reference to FIG. 15 to FIG. 19 can be used as a light source for an optical gyro sensor as illustrated in FIG. 3. Each of the outlet ports Pout can correspond to the outlet port P1 or P2 illustrated in FIG. 3.

Although the present disclosure has been described above based on specific example configurations, the present disclosure is not limited to the above-described example configurations. Embodiments can be combined with one another. For example, the configuration of FIG. 10 in which the third optical waveguide 40 is disposed between the first optical waveguide 20 and the second optical waveguide 30 may be applied to any of the optical circuits 100D to 100H according to the fourth embodiment. The optical axis of the third optical waveguide 40 may be coaxial with the optical axis of one of the first optical waveguide 20 and the second optical waveguide 30, and may be shifted from the optical axis of the other of the first optical waveguide 20 and the second optical waveguide 30 to the extent that optical coupling efficiency is not lowered. A resonator of any of the optical circuits according to the fourth embodiment may be formed by a ring waveguide with a grating. With this configuration, an oscillation wavelength can be specified by the structure of the ring waveguide with the grating. The resonator may be provided with a heater or an electrode for applying a voltage. In this case, a wavelength sweep can be performed by changing the heating temperature or the applied voltage. With any of the above configurations, optical waveguides formed of different materials are coupled to each other with high efficiency.

According to one embodiment of the present disclosure, an optical circuit and a method of manufacturing the same, in which optical waveguides formed of different materials are coupled to each other with high efficiency, can be provided.

### DESCRIPTION OF THE REFERENCE NUMERALS

100, 100A to 100H optical circuit
11 substrate
15 resonator
20, 20F first optical waveguide
21 first substrate
22 first cladding
23 first core
24 second cladding
25 first protective layer
26, 36 ridge
30, 30D, 30E, 30F-1, 30F-2 second optical waveguide
31 second substrate
32, 32-1,32-2 third cladding
33,33-1,33-2 second core
34,34-1,34-2 fourth cladding
40 third optical waveguide
41 temporary substrate
42 fifth cladding
43 third core
44 sixth cladding
50 dielectric multilayer film
120 first layered body
123, 133 linear waveguide
125-1 first active layer
125-2 second active layer
130 second layered body
131 waveguide
131-1 first curved waveguide
132-2 second curved waveguide
135, 136 ring resonator
137 waveguide
138 light reflective structure
139L curved waveguide
140 third layered body
340 second protective layer
CPL evanescent coupler

## Claims

1. An optical circuit comprising:
a substrate;
a first optical waveguide disposed on the substrate; and
a second optical waveguide disposed on the substrate and configured to be optically coupled to the first optical waveguide, wherein:
the first optical waveguide comprises a first cladding, a second cladding, and a first core disposed between the first cladding and the second cladding,
the second optical waveguide comprises a third cladding, a fourth cladding, and a second core disposed between the third cladding and the fourth cladding,
the first cladding is disposed closer to the substrate than the second cladding is,
the third cladding is disposed closer to the substrate than the fourth cladding is, and
a material of the first cladding differs from a material of the third cladding.

2. The optical circuit according to claim 1, wherein:
the first optical waveguide comprises a first linear waveguide at an end portion of the first optical waveguide closer to the second optical waveguide, and
the second optical waveguide comprises a second linear waveguide at an end portion of the second optical waveguide closer to the first optical waveguide.

3. The optical circuit according to claim 1 or 2, wherein:
a difference between a width of the first core and a width of the second core is 3 um or less, where the width of the first core is measured in a direction perpendicular to a layered direction of the first optical waveguide in a cross section orthogonal to a first optical axis of the first optical waveguide, and the width of the second core is measured in a direction perpendicular to a layered direction of the second optical waveguide in a cross section orthogonal to a second optical axis of the second optical waveguide.

4. The optical circuit according to any one of claims 1 to 3, wherein:
at least a portion of the second core of the second optical waveguide comprises an amorphous material.

5. The optical circuit according to any one of claims 1 to 4, wherein:
the first core comprises an active layer,
the first cladding comprises an n-side nitride semiconductor,
the second cladding comprises a p-side nitride semiconductor or a light-transmissive electrically conductive film,
the second core comprises an oxide or a nitride, and
the third cladding and the fourth cladding comprise an oxide or a fluoride.

6. The optical circuit according to any one of claims 1 to 5, further comprising:
a third optical waveguide disposed on the substrate and between the first optical waveguide and the second optical waveguide, wherein:
the third optical waveguide comprises a fifth cladding, a sixth cladding, and a third core disposed between the fifth cladding and the sixth cladding,
the third optical waveguide comprises an amorphous material, and
one end portion of the third optical waveguide is optically coupled to the first waveguide, and another end portion of the third optical waveguide is optically coupled to the second waveguide.

7. The optical circuit according to claim 6, wherein:
the third optical waveguide is disposed between a first end surface of the first optical waveguide and a second end surface of the second optical waveguide, and
at least one of the first end surface comprising the first core or the second end surface comprising the second core is inclined with respect to a normal to the substrate.

8. The optical circuit according to any one of claims 1 to 7, wherein:
the first optical waveguide comprises a dielectric multilayer film formed on an end portion of the first optical waveguide closer to the second optical waveguide, and
a layered direction of the dielectric multilayer film is parallel to a first optical axis of the first optical waveguide.

9. The optical circuit according to any one of claims 1 to 8, wherein:
the second optical waveguide further comprises a ring resonator to which light guided from the first optical waveguide is to be coupled, and
a first resonator is formed between the first optical waveguide and the ring resonator.

10. The optical circuit according to any one of claims 1 to 8, wherein:
the first optical waveguide comprises a first active layer and a second active layer extending in parallel,
the second optical waveguide positioned on both sides of the first optical waveguide in an optical axis direction,
a first curved waveguide is disposed in a portion of the second optical waveguide on one side of the first optical waveguide, and
a second curved waveguide is disposed in another portion of the second optical waveguide on an opposite side of the first optical waveguide, and
the first curved waveguide is connected to the first active layer and the second active layer on the one side of the first optical waveguide,
the second curved waveguide is connected to the first active layer and the second active layer on the opposite side of the first optical waveguide, and
the first curved waveguide and the second curved waveguide form a second resonator.

11. The optical circuit according to any one of claims 1 to 8, wherein:
the second optical waveguide has a light reflective structure formed by a waveguide, and
a third resonator is formed between the first optical waveguide and the light reflective structure.

12. A method of manufacturing an optical circuit, the method comprising:
providing a first layered body comprising a first substrate, a first cladding, a first core, a second cladding, and a first protective layer that are arranged in this order;
providing a second layered body comprising a second substrate, a third cladding, a second core, and a second protective layer that are arranged in this order, the third cladding comprising a material different from a material of the first cladding;
arranging the first layered body and the second layered body side by side such that the first core and the second core face each other, and fixing the first protective layer and the second protective layer to a temporary substrate;
bonding the first substrate and the second substrate to a third substrate;
after the bonding of the first substrate and the second substrate to the third substrate, removing the temporary substrate;
processing the first layered body to obtain a first optical waveguide comprising the first cladding, the first core, and the second cladding; and
processing the second layered body to obtain a second optical waveguide comprising the third cladding and the second core, the obtained second optical waveguide being optically coupled to the first optical waveguide.

13. The method of manufacturing the optical circuit according to claim 12, wherein:
the providing of the first layered body comprises layering the first cladding, the first core, the second cladding, and the first protective layer by a chemical vapor deposition method or a physical vapor deposition method,
the providing of the second layered body comprises layering the third cladding, the second core, and the second protective layer by the chemical vapor deposition method or the physical vapor deposition method, and
the first layered body and the second layered body are provided such that a difference between a distance from an upper end of the first protective layer to a center of the first core and a distance from an upper end of the second protective layer to a center of the second core is 500 nm or less.

14. The method of manufacturing the optical circuit according to claim 12 or 13, wherein:
the processing of the second layered body to obtain the second optical waveguide comprises:
removing the second protective layer, at least a portion of the second core, and at least a portion of the third cladding through a mask, and
layering a fourth cladding so as to cover the third cladding and the second core that remain without being removed.

15. The method of manufacturing the optical circuit according to any one of claims 12 to 14, further comprising:
after the arranging of the first layered body and the second layered body side by side on the temporary substrate, forming a third layered body by sequentially layering a fifth cladding, a third core, and a sixth cladding between the first layered body and the second layered body; and
after the removing of the temporary substrate, processing the third layered body to form a third optical waveguide comprising the fifth cladding, the third core, and the sixth cladding, the obtained third layered body being optically coupled to both the first optical waveguide and the second optical waveguide.

16. The method of manufacturing the optical circuit according to claim 15, wherein:
at least one of a first end surface comprising the first core of the first layered body or a second end surface comprising the second core of the second layered body is inclined with respect to a normal to the temporary substrate, the first end surface and the second end surface facing each other, and
the third layered body is formed between the first end surface of the first layered body and the second end surface of the second layered body.

17. The method of manufacturing the optical circuit according to any one of claims 12 to 16, wherein:
the providing of the first layered body comprises forming a dielectric multilayer film on a lateral surface of the first layered body, the dielectric multilayer film being layered in a direction different from a layered direction of the first layered body, and
the first layered body and the second layered body are arranged side by side, such that the first core and the second core face each other and the dielectric multilayer film is located between the first layered body and the second layered body.

18. The method of manufacturing the optical circuit according to any one of claims 12 to 17, wherein:
the first substrate and the second substrate are bonded to the third substrate after at least one of the first substrate or the second substrate is polished.
